# EUROPÄISCHE PATENTSCHRIFT

(11) **EP 3 763 196 B1**
(45) Veröffentlichungstag und Bekanntmachung des Hinweises auf die Patenterteilung: **26.06.2024**
(21) Anmeldenummer: 20185129.2
(22) Anmeldetag: 10.07.2020
(51) Int. Cl.: A01D 89/00

(54) **AUFNAHMEVORRICHTUNG EINER LANDWIRTSCHAFTLICHEN ERNTEMASCHINE**
HOLDER FOR AN AGRICULTURAL HARVESTER
DISPOSITIF DE COLLECTE D'UNE MOISSONNEUSE AGRICOLE

(30) Priorität: 10.07.2019 DE 102019118741
(43) Veröffentlichungstag der Anmeldung: 13.01.2021
(73) Patentinhaber: CLAAS Saulgau GmbH, 88348 Bad Saulgau (DE)
(72) Erfinder: Boll, Ulrich, 88348 Bad Saulgau (DE)

(56) Entgegenhaltungen:
- DE-A1-102007 015 101
- DE-C1- 3 212 123
- US-A- 1 877 519
- US-B1- 8 181 435

## Beschreibung

Die Erfindung betrifft eine Aufnahmevorrichtung einer landwirtschaftlichen Erntemaschine nach dem Oberbegriff des Anspruchs 1.

Eine Aufnahmevorrichtung einer landwirtschaftlichen Erntemaschine mit den Merkmalen des Oberbegriffs ist aus US 1 877 519 A bekannt.

Die DE 10 2006 061 010 B4 offenbart eine als Ladewagen ausgebildete landwirtschaftliche Erntemaschine mit einer als Pickup ausgebildeten Aufnahmevorrichtung. Eine derartige Aufnahmevorrichtung verfügt über einen Rahmen oder Träger, über Aufnahmezinken sowie über Abstreifer. Die Aufnahmezinken sind voneinander beabstandet und entlang einer Bewegungsbahn antreibbar, um über die Aufnahmezinken Erntegut von einem Untergrund aufzunehmen. Die Abstreifer begrenzen Schlitze, in welchen die Aufnahmezinken laufen. Nach dem Stand der Technik sind die Abstreifer einteilig bzw. einstückig ausgebildet, wobei die Abstreifer mit gegenüberliegenden Enden an dem Rahmen oder Träger der Aufnahmevorrichtung montiert sind. Die Aufnahmezinken sind nur entlang der Abstreifer bei ihrer Bewegung geführt. Im Bereich des Rahmens erfolgt keine Führung der Aufnahmezinken. Daher ist bei der aus der DE 10 2006 061 010 B4 bekannten Aufnahmevorrichtung ein Reversieren der Aufnahmevorrichtung, also eine Drehrichtungsumkehr der Aufnahmezinken, nicht möglich. Es besteht eine Gefahr, dass die Aufnahmezinken dort, wo sie entlang ihrer Bewegungsbahn nicht geführt sind, insbesondere beim Reversieren verhaken.

Hiervon ausgehend liegt der vorliegenden Erfindung die Aufgabe zugrunde, eine neuartige Aufnahmevorrichtung einer landwirtschaftlichen Erntemaschine zu schaffen.

Diese Aufgabe wird durch eine Aufnahmevorrichtung einer landwirtschaftlichen Erntemaschine nach Anspruch 1 gelöst.

Erfindungsgemäß sind die Aufnahmezinken an den Abstreifern entlang ihrer Bewegungsbahn umlaufend geführt.

Bei der erfindungsgemäßen, als Pickup ausgebildeten Aufnahmevorrichtung sind die Aufnahmezinken an den Abstreifern entlang ihrer vollständigen Bewegungsbahn umlaufend geführt. Es existiert demnach kein Abschnitt der Bewegungsbahn, im Bereich dessen die Aufnahmezinken an den Abstreifern nicht geführt sind. Damit ist ein Reversieren bzw. eine Drehrichtungsumkehr der Aufnahmezinken problemlos möglich.

Gemäß der Erfindung weisen die Abstreifer jeweils ein Bügelteil und ein Halteteil auf, wobei die Abstreifer über das Halteteil am Rahmen oder am Träger angreifen, wobei das Bügelteil des jeweiligen Abstreifers am Halteteil des jeweiligen Abstreifers angreift, und wobei die Aufnahmezinken entlang eines ersten Abschnitts ihrer Bewegungsbahn am Bügelteil und entlang eines zweiten Abschnitts ihrer Bewegungsbahn am Halteteil geführt sind. Diese zweiteilige Ausführung der Abstreifer ist konstruktiv einfach und ermöglicht auf besonders vorteilhafte Art und Weise eine umlaufende Führung bzw. Führung der Aufnahmezinken an den Abstreifern entlang ihrer vollständigen Bewegungsbahn.

Erfindungsgemäß ist das Bügelteil des jeweiligen Abstreifers ist mit einem ersten, vorzugsweise unteren Abschnitt am Halteteil des jeweiligen Abstreifers unlösbar befestigt, wobei das Bügelteil des jeweiligen Abstreifers mit einem zweiten, vorzugsweise oberen Abschnitt ebenfalls am Halteteil des jeweiligen Abstreifers über einen Schnellverschluss lösbar befestigt ist. Gemäß einer bevorzugten Weiterbildung der Erfindung ist der Schnellverschluss unverlierbar am zweiten Abschnitt des Bügelteils gehalten.

Dies verfügt über den Vorteil, dass nach Lösen eines Schnellverschlusses und Überführen des Bügelteils in einen zweiten Zustand ein Zugriff auf die Aufnahmezinken möglich ist, um zum Beispiel einen Erntegutwickler im Bereich der Aufnahmerichtung schnell und einfach zu beseitigen.

Vorzugsweise ist das Bügelteil des jeweiligen Abstreifers benachbart zum zweiten Abschnitt am Halteteil des jeweiligen Abstreifers ausgerichtet, derart, dass ein Vorsprung des Halteteils in eine Ausnehmung des Bügelteils eingreift. Dies erlaubt eine besonders vorteilhafte Ausrichtung und Befestigung des Bügelteils über den zweiten Abschnitt desselben am Halteteil des jeweiligen Abstreifers. Ausrichtung und Befestigung sind so funktional voneinander getrennt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Vorderansicht einer erfindungsgemäßen Aufnahmevorrichtung einer landwirtschaftlichen Erntemaschine;
- Fig. 2: die Aufnahmevorrichtung der Fig. 1 in einem zweiten Zustand;

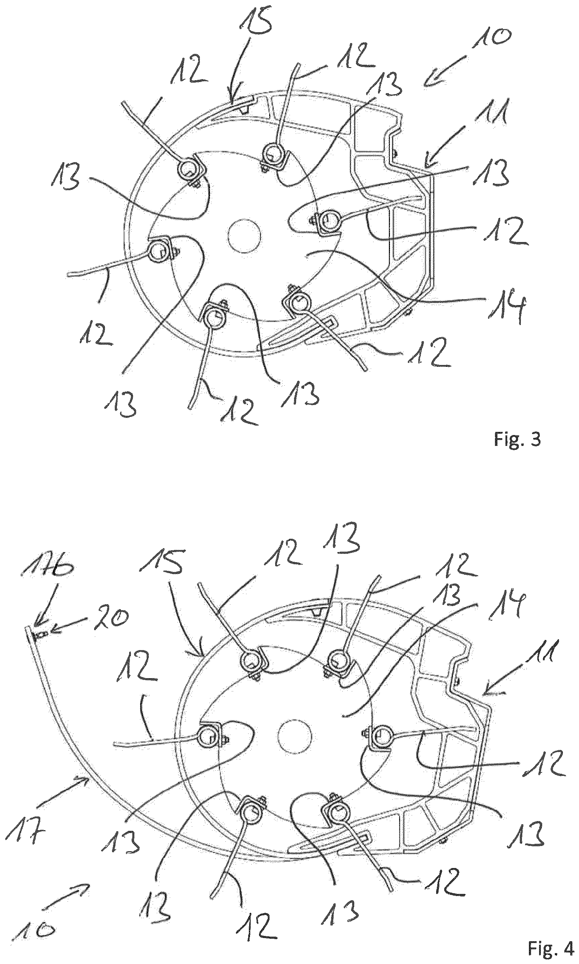

- Fig. 3: eine Seitenansicht der Fig. 1;
- Fig. 4: eine Seitenansicht der Fig. 2;
- Fig. 5: ein Detail der erfindungsgemäßen Aufnahmevorrichtung, nämlich einen Abstreifer derselben in perspektivische Vorderansicht;
- Fig. 6: eine Seitenansicht der Fig. 5;
- Fig. 7: den Abstreifer der Fig. 5 in einem zweiten Zustand;
- Fig. 8: das Detail VIII der Fig. 7; und
- Fig. 9: das Detail IX der Fig. 7.

Die Erfindung betrifft eine Aufnahmevorrichtung einer landwirtschaftlichen Erntemaschine, die als sogenannte Pickup ausgeführt ist. Die Aufnahmevorrichtung ist vorzugsweise Baugruppe einer landwirtschaftlichen Erntemaschine, wie eines Ladewagens, einer Presse, eines Vorsatzgeräts eines Feldhäckslers oder eines Mergers, wobei ein Merger auch als Pickup-Schwader bezeichnet wird. Die Erfindung betrifft demnach nicht nur die Aufnahmevorrichtung, sondern auch eine landwirtschaftliche Erntemaschine, die eine erfindungsgemäße Aufnahmevorrichtung als Baugruppe aufweist.

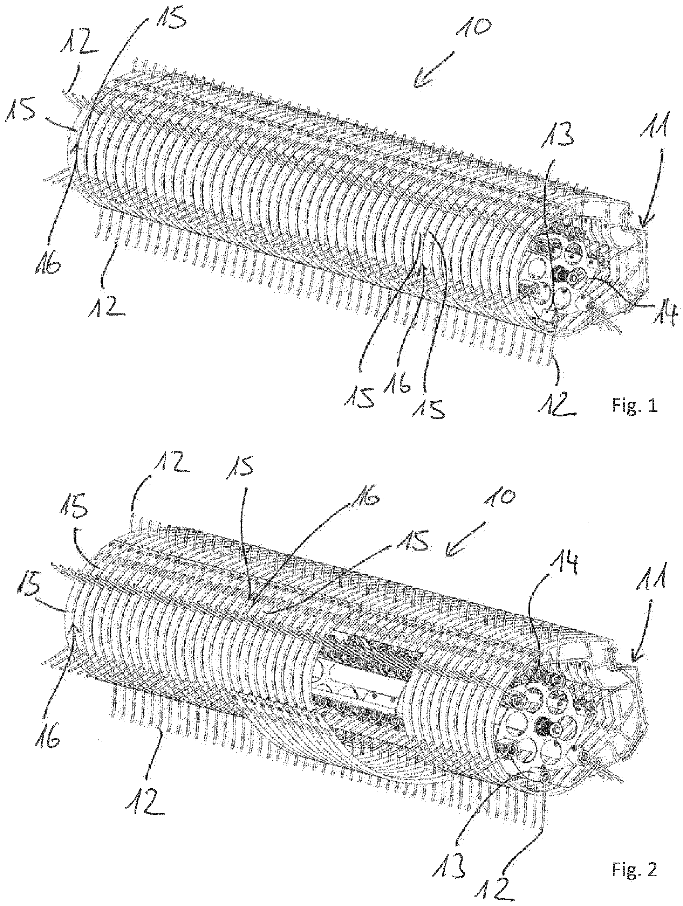

Fig. 1 und 2 zeigen eine erfindungsgemäße Aufnahmevorrichtung 10 einer landwirtschaftlichen Erntemaschine in perspektivischer Ansicht in zwei unterschiedlichen Zuständen. Die Aufnahmevorrichtung 10 dient dem Aufnehmen von geschnittenem bzw. gemähtem Erntegut von einem Untergrund. Die Aufnahmevorrichtung 10 wird auch als Pickup bezeichnet.

Die Aufnahmevorrichtung 10 verfügt über einen Rahmen oder Träger 11, über welchen die Aufnahmevorrichtung 10 an einer landwirtschaftlichen Erntemaschine verbaut werden kann.

Die Aufnahmevorrichtung 10 verfügt ferner über eine Vielzahl von Aufnahmezinken 12. Die Aufnahmezinken 12 sind unter Ausbildung mehreren Zinkengruppen voneinander beabstandet angeordnet. So sind die Aufnahmezinken 12 sowohl in Umfangsrichtung als auch in Axialrichtung der Aufnahmevorrichtung 10 gesehen voneinander beabstandet, wobei jeweils an einer gemeinsamen Axialposition positionierte Aufnahmezinken 12 eine Zinkengruppe ausbilden.

Die Aufnahmezinken 12 sind dabei an mehreren Zinkenhaltern 13 montiert, die sich in Axialrichtung der Aufnahmevorrichtung 10 erstrecken, wobei die Zinkenhalter 13 an ihren axialen Enden jeweils an einer Trommel 14 angreifen und über die Trommel 14 drehend antreibbar sind.

Eine Bewegung der Aufnahmezinken 12 wird demnach durch Rotation der Trommel 14 vorgegeben.

Zusätzlich zu den Aufnahmezinken 12 verfügt die Aufnahmevorrichtung 10 über Abstreifer 15. Die Abstreifer 15 sind in Axialrichtung der Aufnahmevorrichtung 10 gesehen nebeneinander angeordnet und begrenzen Schlitze 16, in welchen die Aufnahmezinken 12 laufen. Jeweils zwei benachbarte Abstreifer 15, die in Axialrichtung der Aufnahmevorrichtung 10 unmittelbar nebeneinander angeordnet sind, begrenzen einen Schlitz 16, in welchen die Aufnahmezinken 12 einer Zinkengruppe laufen.

Bei der erfindungsgemäßen Aufnahmevorrichtung 10 sind die Aufnahmezinken 12 an den Abstreifern 15 entlang ihrer Bewegungsbahn umlaufend und damit entlang ihrer vollständigen Bewegungsbahn geführt. Es existiert demnach kein Abschnitt der Bewegungsbahn der Aufnahmezinken 12, im Bereich dessen die Aufnahmezinken 12 an den Abstreifern 15 nicht geführt sind. Hierdurch kann dann ohne die Gefahr eines Einhakens der Aufnahmezinken 12 eine Drehrichtungsumkehr und damit ein Reversieren der Aufnahmevorrichtung 10 erfolgen.

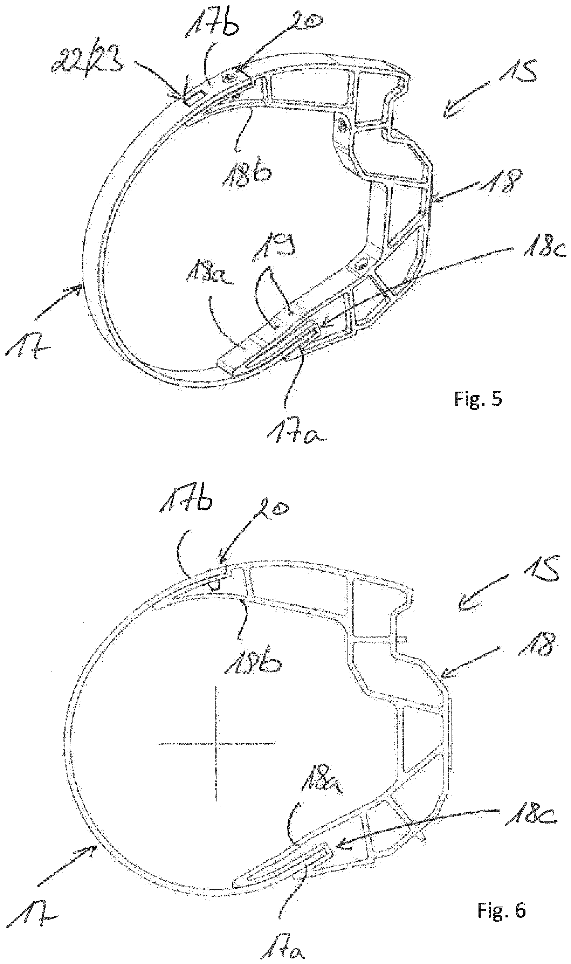

Fig. 5 bis 9 zeigen einen Abstreifer 15 der erfindungsgemäßen Aufnahmevorrichtung 10 in unterschiedlichen Ansichten, ebenso Details desselben. Jeder Abstreifer 15 verfügt über ein Bügelteil 17 und über ein Halteteil 18. Über das Halteteil 18 ist der jeweilige Abstreifer 15 am Träger 11 der Aufnahmevorrichtung 10 montierbar. Das Bügelteil 17 des jeweiligen Abstreifers 15 greift am Halteteil 18 des jeweiligen Abstreifers 15 an. Bei der Bewegung der Aufnahmezinken 12 entlang ihrer Bewegungsbahn sind die Aufnahmezinken 12 entlang eines ersten Abschnitts ihrer Bewegungsbahn am Bügelteil 17 und entlang eines zweiten Abschnitts ihrer Bewegungsbahn am Halteteil 18 geführt, und zwar insbesondere an den entsprechenden Teilen 17, 18 zweier unmittelbar benachbarter Abstreifer 15, die den Schlitz 16 definieren, im Bereich dessen der jeweilige Aufnahmezinken 12 läuft.

Das Bügelteil 17 des jeweiligen Abstreifers 15 ist mit einem ersten, unteren Abschnitt 17a am Halteteil 18 des jeweiligen Abstreifers 15 befestigt, und zwar an einem ersten, unteren Abschnitt 18a des Halteteils 18 unlösbar. Im gezeigten, bevorzugten Ausführungsbeispiel ist dieser erste Abschnitt 17a des Bügelteils 17 in einen Schlitz 18c des ersten Abschnitts 18a des jeweiligen Halteteils 18 eingesetzt und über Nieten 19 unlösbar am Halteteil 18 befestigt.

Mit einem gegenüberliegenden zweiten, oberen Abschnitt 17b ist das Bügelteil 17 des jeweiligen Abstreifers 15 an dem Halteteil 18 lösbar befestigt, wobei das Bügelteil 17 in einem am Halteteil 18 montierten Zustand eine definierte, bogenförmige bzw. kreisabschnittartige Gestalt annimmt. Der zweite, obere Abschnitt 17b des Bügelteils 17 ist an einem zweiten, oberen Abschnitt 18b des Halteteils 18 befestigt.

Das Bügelteil 17 des jeweiligen Abstreifers 15 ist über den zweiten Abschnitt 17b mithilfe eines Schnellverschlusses 20 lösbar am jeweiligen Halteteil 18 befestigt, wobei der Schnellverschluss 20 mit einer Ausnehmung 21 im Halteteil 18 zusammenwirkt.

Dann, wenn der Abschnitt 17b des Bügelteils 17 vom Halteteil 18 des jeweiligen Abstreifers 15 gelöst ist, ist der Schnellverschluss 20 unverlierbar am Abschnitt 17b des Bügelteils 17 gehalten.

Dann, wenn das Bügelteil 17 über den zweiten Abschnitt 17b am Halteteil 18 des jeweiligen Abstreifers 15 befestigt ist, greift der Schnellverschluss 20 in die Ausnehmung 21 des Halteteils 18 ein und steht mit derselben vorzugsweise bajonettartig in Eingriff.

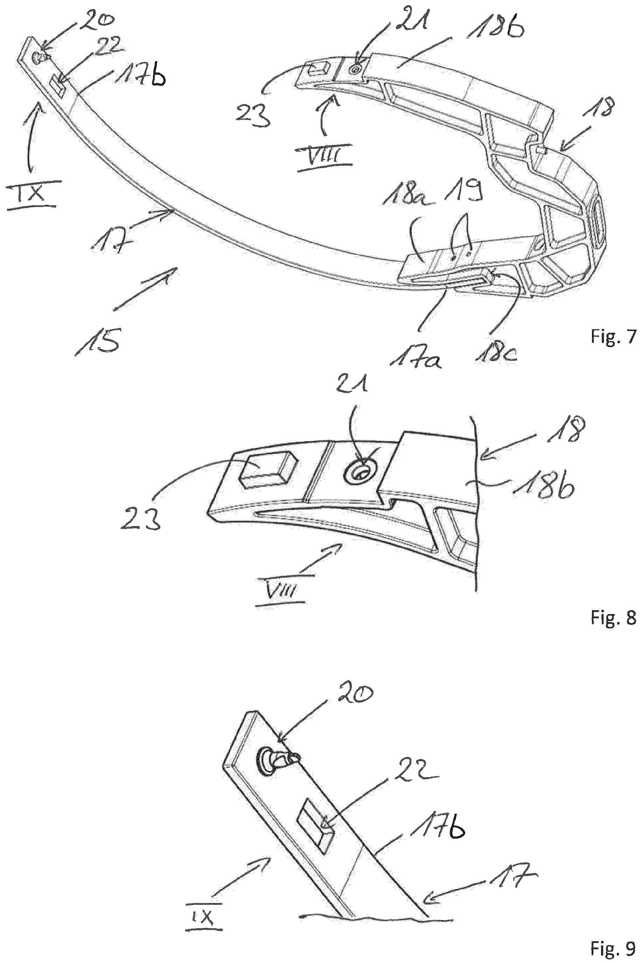

Wie am besten Fig. 7, 8 und 9 entnommen werden kann, verfügt der zweite Abschnitt 17b des Bügelteils 17 benachbart zum Schnellverschluss 20 über eine Ausnehmung 22, die dann, wenn der zweite Abschnitt 17b des Bügelteils 17 am zweiten Abschnitt 18b des Halteteils 18 befestigt ist, mit einem Vorsprung 23 des zweiten Abschnitts 18b des Halteteils 18 zusammenwirkt, der benachbart zur Ausnehmung 21 angeordnet ist. Das Zusammenspiel von Vorsprung 23 des Halteteils 18 und Ausnehmung 22 des Bügelteils 17 bewirkt eine definierte Ausrichtung und Führung des zweiten Abschnitts 17b des Bügelteils 17 am Halteteil 18 des jeweiligen Abstreifers 15 im am Halteteil 18 montierten Zustand.

Dann, wenn der Schnellverschluss 20 des Bügelteils 17 des jeweiligen Abstreifers 15 gelöst ist, kann das Bügelteil 17 des jeweiligen Abstreifers 15 aufgeklappt werden, um einen Zugriff auf einen Innenraum der Aufnahmevorrichtung 10 freizugeben. Dies zeigt Fig. 2, in welcher an einer definierten Anzahl von Abstreifern die zweiten Enden 17b der Bügelteile 17 der Abstreifer 15 gelöst und nach unten geschwenkt sind, um über eine definierte axiale Breite den Zugriff auf den Innenraum der Aufnahmevorrichtung 10 freizugeben. Hierbei können dann Erntegutwickler, die sich im Inneren der Aufnahmevorrichtung 10 ausbilden können, entfernt werden, um einen ungestörten Betrieb der Aufnahmevorrichtung 10 zu gewährleisten. Ebenso können gebrochene Zinken einfach und schnell ausgetauscht werden. Eine erfindungsgemäße Aufnahmevorrichtung bietet eine besonders vorteilhaft einfache und unkomplizierte Zugänglichkeit in den Innenraum, so dass Wartungssowie Instandsetzungsarbeiten, Reinigung etc. schnell und mühelos ausgeführt werden können.

Das Bügelteil 17 eines Abstreifers 15 ist vorzugsweise aus einem im Vergleich zum Halteteil 18 relativ elastischen Kunststoff gefertigt, um das Bügelteil 17 zwischen den unterschiedlichen Zuständen überführen zu können. Anstelle eines elastischen Kunststoffs kann auch ein anderer elastischer Werkstoff für das Bügelteil 17 zum Einsatz kommen. Das Halteteil 18 des jeweiligen Abstreifers 15 kann aus Kunststoff oder Metall bestehen. Im Gegensatz zum Bügelteil 17 ist der Werkstoff des Halteteils 18 relativ steif. So kann das Halteteil 18 zum Beispiel aus Aluminium-Druckguss gefertigt sein.

### Bezugszeichenliste

- 10: Aufnahmevorrichtung
- 11: Träger
- 12: Aufnahmezinken
- 13: Zinkenhalter
- 14: Trommel
- 15: Abstreifer
- 16: Schlitz
- 17: Bügelteil
- 17a: Abschnitt
- 17b: Abschnitt
- 18: Halteteil
- 18a: Abschnitt
- 18b: Abschnitt
- 18c: Schlitz
- 19: Niet
- 20: Schnellverschluss
- 21: Ausnehmung
- 22: Ausnehmung
- 23: Vorsprung

## Patentansprüche

1. Aufnahmevorrichtung (10) einer landwirtschaftlichen Erntemaschine, insbesondere eines Ladewagens, einer Presse, eines Vorsatzgeräts eines Feldhäckslers oder eines Mergers, um Erntegut von einem Untergrund aufzunehmen,
mit einem Rahmen oder Träger (11),
mit Aufnahmezinken (12), die voneinander beabstandet sind und entlang einer Bewegungsbahn antreibbar sind,
mit Abstreifern (15), die zwischen den Aufnahmezinken (12) angeordnet sind und Schlitze (16) begrenzen, in denen die Aufnahmezinken (12) laufen,
und die Aufnahmezinken (12) an den Abstreifern (15) entlang ihrer Bewegungsbahn umlaufend geführt sind
und die Abstreifer (15) jeweils ein Bügelteil (17) und ein Halteteil (18) aufweisen,
die Abstreifer (15) über das Halteteil (18) am Rahmen oder am Träger (11) angreifen,
das Bügelteil (17) des jeweiligen Abstreifers (15) am Halteteil (18) des jeweiligen Abstreifers (15) angreift,
die Aufnahmezinken (12) entlang eines ersten Abschnitts ihrer Bewegungsbahn am Bügelteil (17) und entlang eines zweiten Abschnitts ihrer Bewegungsbahn am Halteteil (18) geführt sind, wobei
das Bügelteil (17) des jeweiligen Abstreifers (15) mit einem ersten, vorzugsweise unteren, Abschnitt (17a) am Halteteil (18) des jeweiligen Abstreifers (15) befestigt ist,
das Bügelteil (17) des jeweiligen Abstreifers (15) mit einem zweiten, vorzugsweise oberen, Abschnitt (17b) ebenfalls am Halteteil (18) des jeweiligen Abstreifers (15) befestigt ist, wobei
das Bügelteil (17) des jeweiligen Abstreifers (15) mit dem zweiten Abschnitt am Halteteil (18) des jeweiligen Abstreifers (15) über einen Schnellverschluss (20) lösbar befestigt ist,
**dadurch gekennzeichnet, dass** das Bügelteil (17) des jeweiligen Abstreifers (15) mit dem ersten Abschnitt (17a) am Halteteil (18) des jeweiligen Abstreifers (15) unlösbar befestigt ist.

2. Aufnahmevorrichtung nach Anspruch 1, **dadurch gekennzeichnet, dass** der Schnellverschluss (20) unverlierbar am zweiten Abschnitt (17b) des Bügelteils (17) gehalten ist.

3. Aufnahmevorrichtung nach einem der Ansprüche 1 oder 2, **dadurch gekennzeichnet, dass** das Bügelteil (17) des jeweiligen Abstreifers (15) am Halteteil (18) des jeweiligen Abstreifers ausgerichtet ist, derart, dass ein Vorsprung (23) des Halteteils (18) in eine Ausnehmung (22) des Bügelteils (17) eingreift.

4. Aufnahmevorrichtung nach einem der Ansprüche 1 bis 3, **dadurch gekennzeichnet, dass** das Bügelteil (17) des jeweiligen Abstreifers (15) aus einem relativ elastischen Kunststoff besteht.

5. Aufnahmevorrichtung nach einem der Ansprüche 1 bis 4, **dadurch gekennzeichnet, dass** das Halteteil (18) des jeweiligen Abstreifers (15) aus einem relativ steifen Kunststoff oder aus Metall besteht.

6. Landwirtschaftliche Erntemaschine mit einer Aufnahmevorrichtung (10) nach einem der Ansprüche 1 bis 5.

7. Landwirtschaftliche Erntemaschine nach Anspruch 6, **dadurch gekennzeichnet, dass** dieselbe ein Merger oder ein Ladewagen ist.

## Claims

1. Pick-up apparatus (10) of an agricultural harvesting machine, in particular a self-loading forage box, a press, an attachment of a field chopper or a merger, in order to pick up harvested crop from an underlying surface,
having a frame or carrier (11),
having pick-up tines (12) which are spaced apart from one another and are drivable along a movement path,
having scrapers (15) which are arranged between the pick-up tines (12) and delimit slots (16) in which the pick-up tines (12) run,
and the pick-up tines (12) are guided rotating along their path of movement at the scrapers (15),
and the scrapers (15) each have a bow part (17) and a holding part (18),
the scrapers (15) act on the frame or on the carrier (11) via the holding part (18),
the bow part (17) of the respective scraper (15) acts on the holding part (18) of the respective scraper (15),
the pick-up tines (12) are guided along a first portion of their movement path on the bow part (17) and along a second portion of their movement path on the holding part (18), wherein
the bow part (17) of the respective scraper (15) is fastened by a first, preferably lower, portion (17a) to the holding part (18) of the respective scraper (15),
the bow part (17) of the respective scraper (15) is likewise fastened by a second, preferably upper, portion (17b) to the holding part (18) of the respective scraper (15), wherein
the bow part (17) of the respective scraper (15) is fastened releasably by the second portion to the holding part (18) of the respective scraper (15) via a rapid closure (20),
**characterized in that** the bow part (17) of the respective scraper (15) is nonreleasably fastened by the first portion (17a) to the holding part (18) of the respective scraper (15).

2. Pick-up apparatus according to Claim 1, **characterized in that** the rapid closure (20) is held captively on the second portion (17b) of the bow part (17) .

3. Pick-up apparatus according to either of Claims 1 and 2, **characterized in that** the bow part (17) of the respective scraper (15) is aligned on the holding part (18) of the respective scraper in such a manner that a protrusion (23) of the holding part (18) engages in a recess (22) of the bow part (17).

4. Pick-up apparatus according to one of Claims 1 to 3, **characterized in that** the bow part (17) of the respective scraper (15) is composed of a relatively elastic plastic.

5. Pick-up apparatus according to one of Claims 1 to 4, **characterized in that** the holding part (18) of the respective scraper (15) is composed of a relatively stiff plastic or of metal.

6. Agricultural harvesting machine with a pick-up apparatus (10) according to one of Claims 1 to 5.

7. Agricultural harvesting machine according to Claim 6, **characterized in that** the latter is a merger or a self-loading forage box.

## Revendications

1. Dispositif de ramassage (10) d'une moissonneuse agricole, en particulier d'une chargeuse, d'une presse, d'un outil porté d'une ramasseuse-hacheuse ou d'un dispositif de fusion pour ramasser la récolte sur un terrain, comprenant
un cadre ou support (11),
des dents de ramassage (12) qui sont espacées les unes des autres et peuvent être entraînées le long d'une trajectoire,
des dispositifs de raclage (15) qui sont disposés entre les dents de ramassage (12) et délimitent des fentes (16) dans lesquelles se déplacent les dents de ramassage (12),
et les dents de ramassage (12) sont guidées sur les dispositifs de raclage (15) de manière tournante le long de leur trajectoire,
et les dispositifs de raclage (15) présentent respectivement une partie d'attache (17) et une partie de maintien (18),
les dispositifs de raclage (15) attaquent au cadre ou au support (11) par l'intermédiaire de la partie de maintien (18),
la partie d'attache (17) du dispositif de raclage (15) respectif attaque à la partie de maintien (18) du dispositif de raclage (15) respectif,
les dents de ramassage (12) sont guidées le long d'une première section de leur trajectoire au niveau de la partie d'attache (17) et le long d'une deuxième section de leur trajectoire au niveau de la partie de maintien (18), dans lequel
la partie d'attache (17) du dispositif de raclage (15) respectif est fixée par une première section (17a), de préférence inférieure, à la partie de maintien (18) du dispositif de raclage (15) respectif,
la partie d'attache (17) du dispositif de raclage (15) respectif est fixée par une deuxième section (17b), de préférence supérieure, également à la partie de maintien (18) du dispositif de raclage (15) respectif, dans lequel
la partie d'attache (17) du dispositif de raclage (15) respectif est fixée de manière amovible par la deuxième section à la partie de maintien (18) du dispositif de raclage (15) respectif par l'intermédiaire d'une fermeture rapide (20),
**caractérisé en ce que** la partie d'attache (17) du dispositif de raclage (15) respectif est fixée de manière inamovible par la première section (17a) à la partie de maintien (18) du dispositif de raclage (15) respectif.

2. Dispositif de ramassage selon la revendication 1, **caractérisé en ce que** la fermeture rapide (20) est maintenue de manière imperdable sur la deuxième section (17b) de la partie d'attache (17).

3. Dispositif de ramassage selon l'une quelconque des revendications 1 ou 2, **caractérisé en ce que** la partie d'attache (17) du dispositif de raclage (15) respectif est alignée sur la partie de maintien (18) du dispositif de raclage respectif de telle sorte qu'une saillie (23) de la partie de maintien (18) vient en prise dans un évidement (22) de la partie d'attache (17) .

4. Dispositif de ramassage selon l'une quelconque des revendications 1 à 3, **caractérisé en ce que** la partie d'attache (17) du dispositif de raclage (15) respectif est composée d'une matière plastique relativement élastique.

5. Dispositif de ramassage selon l'une quelconque des revendications 1 à 4, **caractérisé en ce que** la partie de maintien (18) du dispositif de raclage (15) respectif est composée d'une matière plastique relativement rigide ou de métal.

6. Moissonneuse agricole, comprenant un dispositif de ramassage (10) selon l'une quelconque des revendications 1 à 5.

7. Moissonneuse agricole selon la revendication 6, **caractérisée en ce qu'**il s'agit d'un dispositif de fusion ou d'une chargeuse.
